# FASCICULE DE BREVET EUROPEEN

(11) **EP 2 850 982 B1**
(45) Date de publication et mention de la délivrance du brevet: **20.07.2016**
(21) Numéro de dépôt: 14185427.3
(22) Date de dépôt: 18.09.2014
(51) Int. Cl.: F16D 1/108, A47J 43/046, A47J 43/08, F16D 43/14, F16D 43/16

(54) **Dispositif d'entrainement d'un outil rotatif pour appareil de traitement alimentaire, et appareil de traitement alimentaire pourvu d'un tel dispositif d'entrainement**
Antriebsvorrichtung eines Drehwerkzeugs für ein Gerät zur Lebensmittelaufbereitung, und mit einer solchen Antriebsvorrichtung ausgestattetes Gerät zur Lebensmittelaufbereitung
Device for driving a rotary tool for food processing apparatus, and food processing apparatus provided with such a drive device

(30) Priorité: 20.09.2013 FR 1359070
(43) Date de publication de la demande: 25.03.2015
(73) Titulaire: SANTOS, 69120 Vaulx en Velin (FR)
(72) Inventeur: Gelin, Cédric, 69190 Saint Fons (FR); Fouquet, Nicolas, 69680 Chassieu (FR)
(74) Mandataire: Grand, Guillaume

(56) Documents cités:
- WO-A1-2011/001729
- FR-A1- 2 829 679

## Description

La présente invention concerne un dispositif d'entrainement en rotation d'un outil rotatif pour un appareil de traitement alimentaire. L'invention concerne également un appareil de traitement alimentaire comportant un tel dispositif d'entrainement.

Au sens de l'invention, un tel appareil assure un traitement des aliments qui y sont admis, notamment par pressage, découpage, râpage et/ou tranchage. Un tel appareil trouve son application à tout type d'aliment, que ce soit des fruits ou légumes, des poissons ou encore de la viande.

Cet appareil de traitement est susceptible d'utilisation dans les professions de l'hôtellerie ou encore de la restauration. A titre d'exemple non limitatif, il peut s'agir d'une centrifugeuse pour fruits et légumes, d'une ogive presse-agrume, d'un disque de râpe, ou encore d'un disque de coupe-légumes.

Dans tous les cas, un tel appareil de traitement alimentaire comporte un outil, qui est, en service, entrainé en rotation par une tête solidaire d'un arbre moteur rotatif sur lui-même, aux fins du traitement des aliments admis dans l'appareil, et qui est amovible par rapport à cette tête d'entrainement, notamment aux fins du nettoyage de l'outil. Ainsi, dans le cas d'une centrifugeuse, celle-ci comporte classiquement un socle fixe, sur lequel est rapporté, de façon amovible, un panier rotatif, ce panier comprenant un fond formant râpe ainsi que des parois latérales s'étendant à partir de ce fond, qui constitue un tamis retenant la pulpe formée par râpage tout en laissant s'écouler le jus. Un exemple d'une telle centrifugeuse est fourni par FR-A-2 829 679. Un exemple d'un appareil, tel que défini par le préambule de la revendication 1 annexée, est fourni par WO-A-2011/001729.

Le but de la présente invention est de proposer un appareil de traitement alimentaire du type décrit ci-dessus, dont le verrouillage de l'outil amovible sur la tête d'entrainement en rotation est particulièrement performant, notamment en vue de satisfaire les exigences de fiabilité, de durabilité, de stabilité et de silence, relatives aux équipements professionnels.

A cet effet, l'invention a pour objet un dispositif d'entrainement en rotation d'un outil rotatif pour un appareil de traitement alimentaire, tel que défini à la revendication 1.

Une des idées à la base de l'invention est de chercher à verrouiller l'une avec l'autre des parties centrales, autrement dit des moyeux, appartenant respectivement à l'outil rotatif de l'appareil de traitement alimentaire et à la tête d'entrainement en rotation de cet outil, en agissant extérieurement autour du moyeu mené, afin de permettre de transmettre un couple important et de façon stable autour de l'axe central défini par l'arbre moteur de l'appareil. Selon l'invention, le verrouillage des moyeux menant et mené est réalisé par des masselottes, c'est-à-dire des pièces mécaniques utilisant la force centrifuge pour créer un travail, qui sont agencées extérieurement autour des moyeux. Plus précisément, l'invention prévoit que, sous l'effet de la force centrifuge résultant de la mise en rotation de la tête d'entrainement par l'arbre moteur, plusieurs masselottes sont déplacées de façon qu'une partie de chacune d'elles se rapproche de l'axe central jusqu'à interférer, typiquement en appui, avec la face extérieure du moyeu mené de manière à verrouiller l'un avec l'autre les moyeux mené et menant, tandis que, en l'absence de cette force centrifuge, autrement dit lorsque l'arbre moteur est à l'arrêt, les masselottes occupent une position qui laisse le moyeu mené libre d'être dégagé du moyeu menant afin de désaccoupler facilement l'outil vis-à-vis de la tête d'entrainement, en particulier aux fins de nettoyage de l'outil. Le dispositif d'entrainement conforme à l'invention s'avère ainsi particulièrement efficace, même lorsque l'outil est soumis à de fortes contraintes transversales à l'axe, résultant de sa forme, par exemple en panier, et/ou de la présence d'aliments mal répartis autour de l'axe, comme expliqué plus en détail par la suite.

Des caractéristiques additionnelles avantageuses du dispositif d'entrainement conforme à l'invention sont spécifiées aux revendications 2 à 10.

L'invention a également pour objet un appareil de traitement alimentaire, tel que défini à la revendication 11. Des caractéristiques additionnelles avantageuses de cet appareil sont spécifiées aux revendications 12 et 13.

L'invention sera mieux comprise à la lecture de la description qui va suivre, donnée uniquement à titre d'exemple et faite en se référant aux dessins sur lesquels :
- la figure 1 est une vue en perspective d'un éclaté d'un dispositif d'entrainement conforme à l'invention, associé à un outil rotatif à entrainer par ce dispositif ;
- la figure 2 est une vue similaire à la figure 1, montrant, sous un angle de vue différent, une partie seulement du dispositif d'entrainement, ainsi que l'outil ;
- la figure 3 est une vue en perspective d'une coupe longitudinale du dispositif d'entrainement et de l'outil de la figure 1, dans une configuration assemblée et non verrouillée ;
- la figure 4 est une vue similaire à la figure 3, illustrant le dispositif d'entrainement et l'outil dans une configuration assemblée et verrouillée ; et
- la figure 5 est une vue similaire à la figure 2, montrant la partie précitée du dispositif d'entrainement et l'outil dans la configuration assemblée et verrouillée de la figure 4.

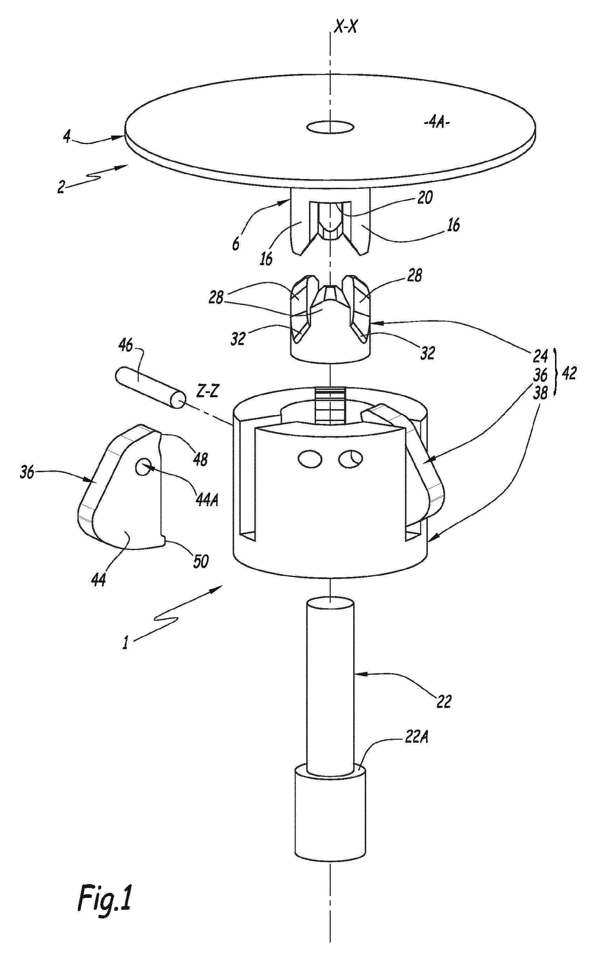

Sur les figures 1 à 5 est représenté un dispositif 1 pour entrainer en rotation autour d'un axe géométrique X-X un outil 2. Le dispositif 1 et l'outil 2 appartiennent à un appareil de traitement alimentaire, qui n'est pas représenté en totalité sur les figures et qui, à titre d'exemple, est l'un des appareils listés dans la partie introductive du présent document.

L'outil 2 inclut un corps principal 4, qui est sensiblement centré sur l'axe X-X et qui, sur les figures, présente une forme globalement discoïdale, étant entendu que cette géométrie n'est pas limitative de la présente invention eu égard à la multitude de formes de réalisation pour l'outil 2 selon l'appareil de traitement alimentaire auquel cet outil appartient.

A titre d'exemple purement illustratif, le corps principal 4 constitue la paroi de fond d'un panier appartenant à une centrifugeuse pour fruits et légumes, la face 4A de cette paroi de fond, qui est tournée à l'opposé du dispositif d'entrainement 1, étant pourvue de pointes de râpage, non représentées sur les figures, ainsi que d'un tamis périphérique, également non représenté.

Plus généralement, on rappelle que l'outil 2 peut prendre des formes diverses, telles qu'un panier, un tambour, un cylindre, un disque, etc., en vue d'assurer des fonctions tout aussi diverses résultant de sa mise en rotation sur lui-même autour de l'axe X-X, telles que des fonctions de râpage, de coupage, d'essorage, de pressage, de tranchage, etc., dans le domaine du traitement d'aliments.

Par commodité, la suite de la description est orientée par rapport à l'axe X-X, en considérant que les termes « haut » et « supérieur » correspondent à une direction axiale vers laquelle est tournée la face 4A du corps principal 4 de l'outil 2, la direction axiale précitée étant donc tournée vers la partie haute des figures 1 à 5, tandis que les termes « inférieur » et « bas » correspondent à une direction axiale de sens opposé. Ainsi, la face 4A du corps principal 4 constitue la face supérieure de ce corps, tandis que sa face axialement opposée 4B en constitue la face inférieure.

L'outil 2 inclut un moyeu 6, qui est centré sur l'axe X-X et qui s'étend axialement vers le bas depuis la face 4B du corps principal 4 de l'outil 2. Le moyeu 6 est solidaire du corps principal 4, en étant par exemple venu de matière avec lui. Dans l'exemple de réalisation considéré sur les figures, le moyeu 6 présente une forme globale tubulaire, qui est centrée sur l'axe X-X et dont l'alésage interne cylindrique 8 est ouvert vers le bas, ainsi qu'ouvert vers le haut en débouchant dans un alésage traversant central 10 du corps principal 4.

Pour des raisons qui apparaîtront plus loin, le moyeu 6 inclut un anneau supérieur 12, qui est centré sur l'axe X-X, qui relie le reste du moyeu 6 à la face 4B du corps principal 4. On notera que l'anneau précité 12 peut, à titre de variante non représentée, présenter une dimension axiale plus importante que celle illustrée sur les figures.

La face extérieure de l'anneau 12 est pourvue d'un renfoncement en creux 14. Ce renfoncement 14 court sur toute la périphérie extérieure de l'anneau 12 et est délimité, vers le bas, par une surface tronconique 14A, centrée sur l'axe X-X et divergente vers le bas.

Le moyeu 6 inclut en outre trois branches allongées 16, qui s'étendent en longueur de manière parallèle à l'axe X-X, en faisant saillie vers le bas depuis l'anneau 12. Ces branches 16 constituent, en quelque sorte, des prolongements vers le bas de l'anneau 12, dans le sens où les faces extérieure et intérieure de chacune de ces branches 16 appartiennent respectivement à des enveloppes géométriques cylindriques respectivement définies par les faces intérieure et extérieure de l'anneau 12, plus généralement définies par les faces extérieure et intérieure du moyeu tubulaire 6. Les branches 16 sont disposées de manière régulière autour de l'axe X-X, en étant séparées deux à deux par un créneau 20. Chacun des créneaux 20 est ouvert, à la fois, vers le bas et dans les deux sens d'une direction radiale à l'axe X-X. Dans le même temps, chacun des créneaux 20 est fermé, à la fois, vers le haut par une portion périphérique de l'extrémité inférieure de l'anneau 12 et, suivant une direction périphérique à l'axe X-X, par deux des branches 16, se succédant autour de l'axe X-X.

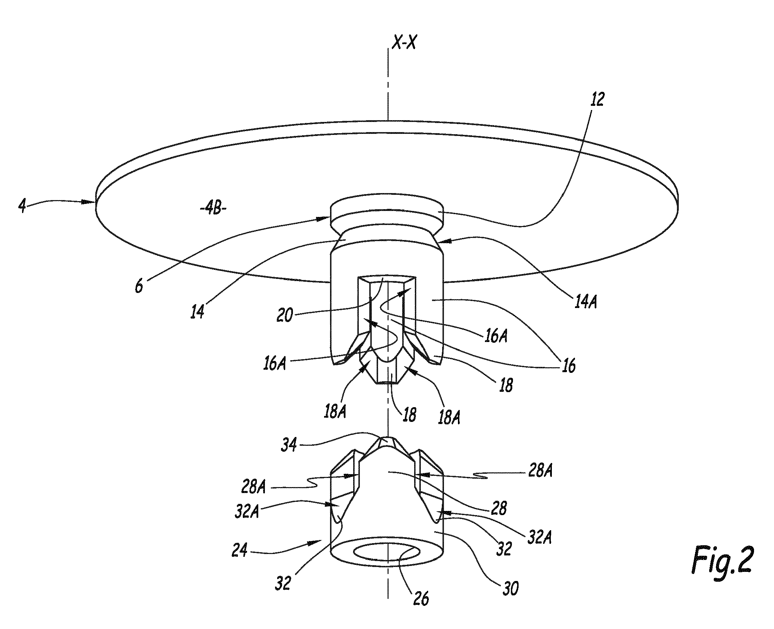

Comme bien visible sur la figure 2, chacune des branches 16 présente une extrémité axiale inférieure 18, qui est libre et qui est effilée vers le bas, en délimitant deux bords 18A, s'opposant l'un à l'autre suivant une direction périphérique à l'axe X-X, qui convergent l'un vers l'autre vers le bas. De plus, chacun des bords opposés 18A de l'extrémité libre 18 est relié, vers le haut, à l'extrémité inférieure de l'anneau 12 par un bord rectiligne 16A, qui est délimité par la branche correspondante 16 et qui s'étend de manière sensiblement parallèle à l'axe X-X.

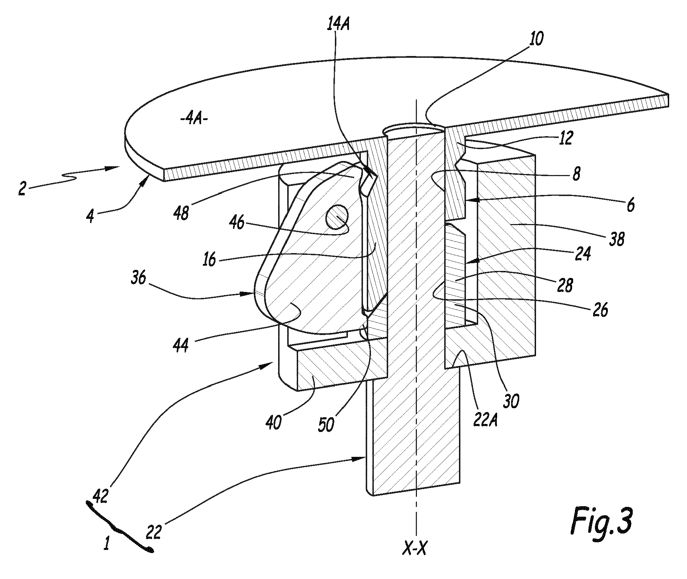

Comme bien visible sur les figures 1 et 3, le dispositif d'entrainement 1 comporte un arbre 22, qui est centré sur l'axe X-X et qui est qualifié de moteur dans le sens où cet arbre 22 est conçu pour être mis en rotation sur lui-même autour de l'axe X-X par un moteur, non représenté, notamment un moteur électrique. Lorsque l'outil 2 est assemblé au dispositif d'entrainement 1, la partie terminale supérieure de l'arbre 22 est reçue, de manière coaxiale et sensiblement complémentaire, dans l'alésage 8 du moyeu 6 et, le cas échéant, dans l'alésage 10 du corps principal 4.

Le dispositif d'entrainement 1 comporte en outre un moyeu 24, qui est solidaire de l'arbre moteur 22. Comme bien visible sur les figures 1 à 3, le moyeu 24 présente, dans l'exemple de réalisation considéré sur les figures, une forme globale tubulaire, qui est centrée sur l'axe X-X et dont l'alésage interne 26 reçoit, de manière coaxiale et sensiblement complémentaire, l'arbre moteur 22. Lorsque l'outil 2 est assemblé au dispositif d'entrainement 1, le moyeu 24 et le moyeu 6 sont conçus pour être mis en prise l'un avec l'autre pour transmettre un mouvement rotatif autour de l'axe X-X, de l'arbre moteur 22 au corps principal 4, via, successivement, le moyeu 24 et le moyeu 6. Ainsi, on comprend que le moyeu 24 peut être qualifié de moyeu menant tandis que le moyeu 6 peut être qualifié de moyeu mené.

Dans l'exemple de réalisation considéré sur les figures, et comme bien visible sur les figures 1 et 2, le moyeu 24 inclut trois branches allongées 28, qui s'étendent en longueur de manière parallèle à l'axe X-X et qui sont saillantes vers le haut depuis un anneau inférieur 30 du moyeu 24. Les branches 28 sont disposées de manière régulière autour de l'axe X-X, en étant séparées deux à deux par un créneau 32. La structure à trois branches et à trois créneaux du moyeu 24 est similaire à la structure à trois branches à trois créneaux du moyeu 6 : lorsque l'outil 2 est assemblé au dispositif d'entrainement 1, comme sur les figures 3 à 5, chacune des branches 16 du moyeu 6 est reçue dans l'un des créneaux 32 du moyeu 24 tandis que chacune des branches 28 du moyeu 24 est reçue dans l'un des créneaux 20 du moyeu 6, mettant ainsi en prise l'un avec l'autre les moyeux 6 et 24.

Pour des raisons qui apparaîtront plus loin, et à la différence du fond des créneaux 20 du moyeu 6, le fond de chacun des créneaux 32 du moyeu 24 est creusé vers le bas de façon que ce fond du créneau 32 forme des parois 32A, agencées en regard l'une de l'autre suivant une direction périphérique à l'axe X-X, qui sont convergentes l'une vers l'autre vers le bas et qui reçoivent entre elles l'extrémité libre effilée 18 de la branche correspondante 16 du moyeu 6. Chacune de ces parois 32A est reliée, vers le haut, à l'extrémité libre 34 d'une des branches 28 par un bord rectiligne 28A qui est délimité par la branche correspondante 28, en s'étendant parallèlement à l'axe X-X.

Egalement pour des raisons qui apparaîtront plus loin, l'extrémité libre 34 de chaque branche 28 ne présente pas la même conformation que les extrémités libres 18 des branches 16 du moyeu 6. Ici, cette extrémité libre 34 est simplement émoussée.

Comme représenté sur les figures 1 et 3, le dispositif d'entrainement 1 comporte également des masselottes 36 qui, dans l'exemple de réalisation considéré ici, sont portées par un support commun 38 solidaire de l'arbre moteur 22. Comme bien visible sur la figure 3, ce support 38 présente, ici, une forme globale tubulaire, qui est centrée sur l'axe X-X et qui entoure extérieurement le moyeu 24, ce qui agence les masselottes extérieurement autour du moyeu 24, ainsi que du moyeu 6 en présence de l'outil 2. Dans la forme de réalisation considérée sur les figures, le support 38 inclut une paroi transversale 40, dont un alésage central est monté de manière coaxiale et complémentaire autour de l'arbre moteur 22 et qui est axialement interposé entre l'anneau inférieur 30 du moyeu 24 et un épaulement 22A de l'arbre moteur 22, cette paroi transversale 40 pouvant ainsi avantageusement participer à la solidarisation entre le moyeu 24 et l'arbre moteur 22. Ceci étant, d'autres formes de réalisation sont envisageables en ce qui concerne l'agencement de l'arbre moteur 22, du moyeu 24 et du support 38, du moment que ces trois composants sont, en service, solidaires les uns des autres, et ce par tout moyen approprié, non représenté sur les figures.

Dans tous les cas, et comme cela ressortira plus en détail de la description de leur fonctionnement, on peut considérer que le moyeu menant 24, les masselottes 36 et le support 38 appartiennent à une tête 42 d'entrainement de l'outil 2 en rotation autour de l'axe X-X, qui est solidaire de l'arbre moteur 22 et sur laquelle l'outil 2 est prévu d'être rapporté de façon amovible.

Dans l'exemple considéré, les masselottes 36 sont au nombre de trois, en étant réparties régulièrement autour de l'axe X-X, ce qui revient à dire qu'elles sont disposées à 120° les unes des autres autour de cet axe.

Chacune des masselottes 36 est montée à basculement libre, par rapport au support 38, autour d'un axe Z-Z qui est orthoradial à l'axe X-X. Dans l'exemple de réalisation considéré sur les figures, le corps 44 de chaque masselotte 36 délimite un trou traversant 44A, qui est centré sur l'axe Z-Z et qui reçoit, de manière coaxiale et complémentaire, une goupille 46, autour de laquelle la masselotte 36 est librement basculante et qui est solidarisée au support 38.

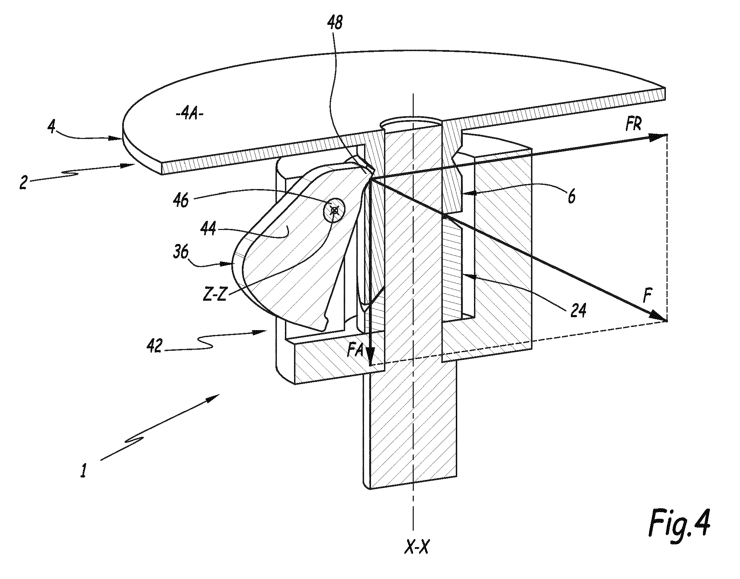

Comme bien visible sur la figure 3, le corps 44 de chaque masselotte 36 inclut, en saillie de sa face tournée vers l'axe X-X, un nez supérieur 48 et un pied inférieur 50, ce nez 48 et ce pied 50 étant situés de part et d'autre d'un plan géométrique, contenant l'axe Z-Z et perpendiculaire à l'axe X-X. A l'état assemblé de l'arbre moteur 22, du moyeu 24 et du support 38, et lorsque l'arbre moteur est à l'arrêt, c'est-à-dire qu'il ne tourne pas sur lui-même autour de l'axe X-X, les masselottes 36 occupent chacune une position de repos, qui est montrée sur la figure 3 et dans laquelle, sous l'effet gravitaire du poids de leur corps 44, leur pied 50 s'appuie radialement, en direction de l'axe X-X, contre l'anneau inférieur 30 du moyeu 24, tandis que leur nez 48 est radialement distant de l'axe X-X d'une valeur strictement supérieure au rayon de la face cylindrique extérieure du moyeu 6. Lorsque l'arbre moteur 22 tourne sur lui-même autour de l'axe X-X, chacune des masselottes 36 bascule autour de l'axe Z-Z, sous l'effet d'une force centrifuge résultant de la rotation de l'arbre, depuis sa position de repos de la figure 3 à une position d'utilisation, qui est montrée sur la figure 4 et dans laquelle le pied 50 est davantage écarté radialement de l'axe X-X que dans la position de repos de la masselotte, tandis que le nez 48 est rapproché de l'axe X-X, c'est-à-dire qu'il occupe une position plus proche radialement de l'axe X-X que celle occupée dans la position de repos de la masselotte.

Le fonctionnement de l'outil 2, ainsi que de son dispositif d'entrainement en rotation 1, va maintenant être explicité dans ce qui suit.

Il s'agit tout d'abord de monter l'outil 2 sur la tête d'entrainement 42. Avantageusement, cette opération est réalisée en tirant uniquement parti de la gravité : en effet, le rapprochement axial vers le bas du moyeu 6 sur le moyeu 24 conduit, de façon spontanée, à ce que les branches 16 du moyeu 6 s'introduisent dans les créneaux 32 du moyeu 24, le cas échéant par glissement transversal des extrémités libres 18 des branches 16 du moyeu 6 contre les extrémités libres émoussées 34 des branches 28 du moyeu 24, jusqu'à ce que les extrémités libres 18 des branches 16 du moyeu 6 soient reçues dans le fond des créneaux 32 du moyeu 24, entre les parois 32A de chacun de ses fonds. Les moyeux 6 et 24 sont alors en prise l'un avec l'autre.

Il est à noter que cette opération de montage de l'outil 2 sur la tête d'entrainement 42 est particulièrement simple, dans la mesure où elle n'est pas entravée par les masselottes 36, en particulier par les nez 48 de ces masselottes puisque ces dernières sont dans leur position de repos de la figure 3. Autrement dit, dans cette configuration, les masselottes 36 n'interfèrent pas avec le moyeu mené 6.

Puis, lorsque l'arbre moteur 22 est mis en rotation sur lui-même autour de l'axe X-X, sous l'action de son moteur non représenté, la force centrifuge résultant de cette mise en rotation agit sur les masselottes 36, en les passant progressivement de leur position de repos de la figure 3 à leur position d'utilisation de la figure 4. Ceci étant, avant que les masselottes 36 n'atteignent effectivement leur position d'utilisation, un couple autour de l'axe X-X est transmis de l'arbre moteur 22 à l'outil 2 par appui orthoradial d'un des bords rectilignes 28A de chacune des branches 28 du moyeu 24 contre le bord rectiligne associé 16A des branches 16 du moyeu 6: ainsi, par appui direct entre les bords rectilignes précités 28A et 16A, les branches 28 du moyeu menant 24 s'appuient contre les branches 16 du moyeu mené 6 en formant une composante d'appui exclusivement, ou à tout le moins essentiellement, orthoradiale à l'axe X-X, en entrainant ainsi l'outil 2 en rotation autour de l'axe X-X, et ce même si l'outil 2 n'est pas monté rigoureusement à fond sur la tête d'entrainement 42, ou bien même si la mise en rotation de l'outil 2 induit un léger déséquilibre de cet outil, transversalement à l'axe X-X, par exemple en raison de la présence d'aliments répartis de manière non homogène, autour de l'axe X-X, sur la face 4A du corps principal 4 de cet outil 2.

Une fois que les masselottes ont atteint leur position d'utilisation de la figure 4, leur nez 48 est, sous l'effet de la force centrifuge agissant sur les masselottes 36, plaqué en appui contre la surface tronconique extérieure 14A du moyeu 6, en formant une force d'appui référencée F sur la figure 4, avec des composantes, à la fois, axiale FA, qui est dirigée vers le bas, et radiale FR, qui est dirigée vers l'axe X-X. On comprend que, sous l'effet de la composante axiale FA de la force d'appui F ainsi générée, chacune des masselottes 36 maintient axialement le moyeu mené 6 en prise avec le moyeu menant 24, dans le sens où, d'une part, si besoin est, l'outil 2 se retrouve monté à fond sur la tête d'entraînement 42 et, d'autre part, tout dégagement intempestif de l'outil 2 vers le haut vis-à-vis du dispositif d'entrainement 1 est empêché. Et, sous l'effet de la composante radiale FR de cette force d'appui F, les masselottes 36, considérées conjointement, assurent le centrage du moyeu 6 sur l'axe X-X, en alignant radialement le moyeu 6 avec cet axe X-X.

Plus généralement, on comprend que, dans leur position d'utilisation, les masselottes 36 verrouillent, au moins axialement et, avantageusement, de manière coaxiale, la tête d'entrainement 42 avec le moyeu 6 et donc avec l'outil 2. Ce verrouillage est particulièrement performant du fait qu'il résulte d'une action des nez 48 des masselottes 36 sur la face extérieure du moyeu mené 6, cette action induisant à la fois une grande efficacité et une grande stabilité pour l'entraînement de l'outil 2 par la tête 42. Ces performances sont déterminantes dans le domaine des équipements de traitement alimentaire professionnels, puisque l'outil rotatif 2 est susceptible de traiter une grosse quantité d'aliments simultanément, qui peuvent être mal répartis autour de l'axe X-X, qui induisent des efforts centrifuges considérables, en particulier lorsque l'outil inclut un panier périphérique ou similaire, et/ou qui peuvent même induire des contraintes vers le haut selon l'interaction entre l'outil et les aliments, par exemple en cas de tranchage des aliments.

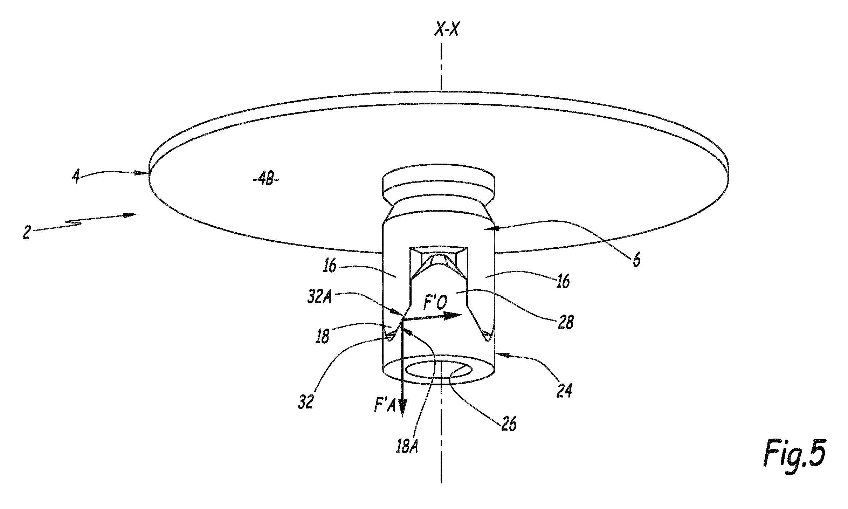

En outre, suivant une disposition particulièrement avantageuse, la composante axiale FA de la force F d'appui des masselottes 36 en position d'utilisation sur le moyeu 6 agit sur les branches 16 de ce moyeu 6 pour que les bords opposés 18A de chacune de leur extrémité libre 18 s'appuient sur les parois 32A formées dans le fond de chacun des créneaux 32 du moyeu 24, en formant des composantes d'appui entre ces bords 18A et ces parois 32A, qui sont, à la fois, parallèles à l'axe X-X et dirigées vers le bas, comme indiqué par la référence F'A sur la figure 5, et orthoradiales à cet axe X-X, comme indiqué par la référence F'O sur la figure 5. De cette façon, la transmission du couple entre le moyeu menant 24 et le moyeu mené 6 s'effectue essentiellement, voire exclusivement, à travers les bords 18A et les parois 32A, qui sont appuyés fermement les uns contre les autres de manière verrouillée par les masselottes 36, ce qui stabilise la transmission de couple. En particulier, les phénomènes vibratoires sont neutralisés et l'usure des pièces est significativement limitée, et ce aussi bien à l'interface entre les moyeux menant et mené, qu'à l'interface entre le moyeu mené et les masselottes 36. Cela confère un caractère particulièrement silencieux à l'appareil de traitement alimentaire auquel appartiennent l'outil 2 et le dispositif d'entrainement 1.

Lors de l'arrêt du moteur, la vitesse de rotation de la tête d'entrainement 42 diminue progressivement, de sorte que chaque masselotte 36 se déplace de sa position d'utilisation jusqu'à sa position de repos, sous l'effet gravitaire du poids de son corps 44. Le démontage de l'outil 2 peut alors être assuré de façon particulièrement simple, étant donné que cette action n'est pas gênée par les masselottes 36, en particulier par leur nez 48 qui n'interfère plus avec le moyeu 6. De nouveau, on comprend que cette facilité de démontage et celle du remontage subséquent sont déterminantes dans le domaine des équipements professionnels.

Divers aménagements variantes au dispositif d'entrainement 1 et à l'outil 2 sont par ailleurs envisageables :
- plutôt que de prévoir trois masselottes disposées à 120° les unes des autres autour de l'axe X-X, seules deux masselottes peuvent être prévues, diamétralement opposées l'une à l'autre, ou bien quatre, voire davantage de masselottes peuvent aussi convenir ;
- plutôt que d'être tronconique et/ou formée par la partie inférieure d'un renfoncement similaire au renfoncement 14, la surface 14A du moyeu mené 6, contre laquelle s'appuient les masselottes 36 dans leur position d'utilisation, peut présenter diverses formes de réalisation, du moment qu'elles coopèrent avec les masselottes en position d'utilisation pour verrouiller le moyeu mené 6 en prise avec le moyeu menant 24, avantageusement en maintenant axialement le moyeu mené 6 contre le moyeu menant 24 et en centrant le moyeu mené 6 sur l'axe central X-X de l'arbre moteur 22 ; et /ou
- de même, le nombre et la géométrie des branches 16 et 28 des moyeux mené 6 et menant 24 ne sont pas limités à l'exemple de réalisation considéré sur les figures.

## Revendications

1. Dispositif (1) d'entrainement en rotation d'un outil rotatif (2) pour un appareil de traitement alimentaire, notamment d'un panier pour une centrifugeuse pour fruits et légumes,
ce dispositif comprenant un arbre moteur (22), qui est rotatif sur lui-même autour d'un axe central (X-X) et qui est solidaire d'une tête (42) d'entrainement de l'outil (2) en rotation autour de l'axe, l'outil étant rapporté sur la tête d'entrainement de façon amovible, et la tête d'entrainement incluant un moyeu menant (24) qui est adapté pour être mis en prise avec un moyeu mené (6) de l'outil (2) pour transmettre un mouvement rotatif autour de l'axe central (X-X) du moyeu menant au moyeu mené,
**caractérisé en ce que** la tête d'entrainement (42) est pourvue de masselottes (36) de verrouillage de l'outil (2) sur la tête d'entrainement, lesquelles masselottes sont mobiles, sous l'effet d'une force centrifuge résultant de la mise en rotation autour de l'axe central (X-X) de la tête d'entrainement par l'arbre moteur (22), entre une position de repos, dans laquelle les masselottes n'interfèrent pas avec le moyeu mené (6), et une position d'utilisation, dans laquelle une partie (48) de chacune des masselottes est rapprochée de l'axe central (X-X) et coopère mécaniquement avec le moyeu mené pour le maintenir en prise avec le moyeu menant (24).

2. Dispositif suivant la revendication 1, **caractérisé en ce que** ladite partie de chacune des masselottes de verrouillage (36) forme un nez d'appui (48) qui, lorsque la masselotte de verrouillage est dans sa position d'utilisation, est appuyé sur une surface de coopération (14A), délimitée par la face extérieure du moyeu mené (6), de manière à, à la fois, maintenir axialement le moyeu mené en prise avec le moyeu menant (24) et aligner radialement le moyeu mené (6) avec l'axe central (X-X).

3. Dispositif suivant la revendication 2, **caractérisé en ce que** ladite surface de coopération (14A) est sensiblement tronconique, centrée sur l'axe central (X-X) et divergente vers le moyeu menant (24).

4. Dispositif suivant l'une quelconque des revendications précédentes, **caractérisé en ce que** chacune des masselottes de verrouillage (36) est mobile entre sa position de repos et sa position d'utilisation par basculement autour d'un axe (Z-Z) orthoradial à l'axe central (X-X).

5. Dispositif suivant l'une quelconque des revendications précédentes, **caractérisé en ce que** la tête d'entrainement (42) inclut en outre un support (38), qui est au moins partiellement agencé extérieurement autour du moyeu menant (24) et sur lequel les masselottes de verrouillage (36) sont portées librement mobiles entre leur position de repos et leur position d'utilisation.

6. Dispositif suivant la revendication 5, **caractérisé en ce que** les masselottes de verrouillage (36) sont portées sur le support (38) par l'intermédiaire de goupilles (46) respectivement centrées sur des axes orthoradiaux (Z-Z) à l'axe central (X-X).

7. Dispositif suivant l'une quelconque des revendications précédentes, **caractérisé par** trois masselottes de verrouillage (36), qui sont disposés à 120° les unes des autres autour de l'axe central (X-X).

8. Dispositif suivant l'une quelconque des revendications précédentes, **caractérisé en ce que** le moyeu menant (24) et le moyeu mené (6) incluent, respectivement, des branches menantes (28) et des branches menées (16), qui s'étendent chacune de manière sensiblement parallèle à l'axe central (X-X) et qui sont disposées de manière sensiblement régulière autour de l'axe central en étant séparées deux à deux par, respectivement, un créneau menant (32) et un créneau mené (20), les branches menantes étant reçues dans les créneaux menés et les branches menées étant reçues dans les créneaux menants lorsque les moyeux menant et mené sont en prise l'un avec l'autre,
et **en ce que** chacune des branches menées (16) présente, à son extrémité axiale libre (18), des bords (18A) qui sont opposés l'un à l'autre suivant une direction périphérique à l'axe central (X-X) et qui, sous l'effet des masselottes de verrouillage (36) dans leur position d'utilisation, sont appuyés sur des parois (32A) formées dans le fond du créneau menant (32) recevant la branche menée, en formant des composantes d'appui (F'A, F'O) à la fois parallèle et orthoradiale à l'axe central (X-X).

9. Dispositif suivant la revendication 8, **caractérisé en ce que** chacune des branches menante (28) et menée (16) est pourvue, en dehors de son extrémité axiale libre (34, 18), d'au moins un bord rectiligne (28A, 16A), qui est sensiblement parallèle à l'axe central (X-X), le ou un des bords rectilignes (28A) de chaque branche menante (28) étant appuyé, en formant une composante d'appui essentiellement, voire exclusivement, orthoradiale à l'axe central (X-X), sur le ou un des bords rectilignes (16A) d'une des branches menées (16) lorsque l'arbre moteur (22) est mis en rotation sur lui-même et tant que les masselottes de verrouillage (36) n'ont pas atteint leur position d'utilisation depuis leur position de repos.

10. Dispositif suivant l'une des revendications 8 ou 9, **caractérisé en ce que** chacune des branches menantes (28) présente une extrémité axiale libre (34) émoussée, contre laquelle les extrémités axiales libres (18) des branches menées (16) glissent suivant une direction périphérique à l'axe central (X-X) lorsque les branches menées sont introduites dans les créneaux menants (32).

11. Appareil de traitement alimentaire, comportant un outil rotatif (2) et un dispositif (1) d'entrainement en rotation de cet outil, qui est conforme à l'une quelconque des revendications précédentes et sur la tête d'entrainement (42) duquel l'outil est rapporté de façon amovible.

12. Appareil suivant la revendication 11, **caractérisé en ce que** l'outil rotatif (2) est un panier.

13. Appareil suivant l'une des revendications 11 ou 12, **caractérisé en ce que** l'appareil est une centrifugeuse pour fruits et légumes.

## Patentansprüche

1. Vorrichtung (1) zum Drehantrieb eines Drehwerkzeugs (2) für ein Gerät zur Lebensmittelverarbeitung, insbesondere eines Korbs für eine Zentrifuge für Obst und Gemüse,
wobei die Vorrichtung eine Motorwelle (22) umfasst, die um eine zentrale Achse (X-X) um sich selbst drehbar ist und die um die Achse drehfest mit einem Antriebskopf (42) des Werkzeugs (2) verbunden ist, wobei das Werkzeug abnehmbar auf den Antriebskopf aufgesetzt ist und der Antriebskopf eine Antriebsnabe (24) umfasst, die zur Übertragung einer Drehbewegung der Antriebsnabe um die zentrale Achse (X-X) auf die angetriebene Nabe mit einer angetriebenen Nabe (6) des Werkzeugs (2) in Eingriff bringbar ist,
**dadurch gekennzeichnet,**
**dass** der Antriebskopf (42) mit Rastfliehgewichten (36) zum Verrasten des Werkzeugs (2) an dem Antriebskopf versehen ist, wobei die Fliehgewichte unter der Wirkung einer Zentrifugalkraft infolge der Drehung des Antriebskopfes um die zentrale Achse (X-X) des Antriebskopfs durch die Motorwelle (22) zwischen einer Ruhestellung, in der die Fliehgewichte nicht in die angetriebene Nabe (6) eingreifen, und einer Betriebsstellung beweglich sind, in der jeweils ein Abschnitt (48) der Fliehgewichte an die zentrale Achse (X-X) angenähert ist und mechanisch mit der angetriebenen Nabe zusammenwirkt, um diese in Eingriff mit der Antriebsnabe (24) zu halten.

2. Vorrichtung nach Anspruch 1,
**dadurch gekennzeichnet,**
**dass** die Abschnitte der Rastfliehgewichte (36) jeweils eine Stütznase (48) ausbilden, die sich, wenn sich das Rastfliehgewicht in seiner Betriebsstellung befindet, an einer durch die Außenfläche der angetriebenen Nabe (6) begrenzte Zusammenwirkungsfläche (14A) abstützt, so dass die angetriebene Nabe axial in Eingriff mit der Antriebsnabe (24) haltbar ist und zugleich die angetriebene Nabe (6) radial an der zentralen Achse (X-X) ausrichtbar ist.

3. Vorrichtung nach Anspruch 2,
**dadurch gekennzeichnet,**
**dass** die Zusammenwirkungsfläche (14A) im Wesentlichen kegelstumpfförmig ausgebildet und auf der zentralen Achse (X-X) zentriert ist und in Richtung der Antriebsnabe (24) auseinanderläuft.

4. Vorrichtung nach einem der vorhergehenden Ansprüche,
**dadurch gekennzeichnet,**
**dass** die Rastfliehgewichte (36) jeweils zwischen ihrer Ruhestellung und ihrer Betriebsstellung um eine zur zentralen Achse (X-X) orthoradiale Achse schwenkbar sind.

5. Vorrichtung nach einem der vorhergehenden Ansprüche,
**dadurch gekennzeichnet,**
**dass** der Antriebskopf (42) des Weiteren einen Rahmen (38) umfasst, der zumindest teilweise außen um die Antriebsnabe (24) angeordnet ist und an dem die Rastfliehgewichte (36) zwischen ihrer Ruhestellung und ihrer Betriebsstellung frei beweglich gelagert sind.

6. Vorrichtung nach Anspruch 5,
**dadurch gekennzeichnet,**
**dass** die Rastfliehgewichte (36) mittels Stiften (46), die jeweils auf zu der zentralen Achse (X-X) orthoradialen Achsen (Z-Z) zentriert sind, an dem Rahmen (38) gelagert sind.

7. Vorrichtung nach einem der vorhergehenden Ansprüche,
**gekennzeichnet durch**
drei Rastfliehgewichte (36), die jeweils unter einem Winkel von 120° zueinander um die zentrale Achse (X-X) herum angeordnet sind.

8. Vorrichtung nach einem der vorhergehenden Ansprüche,
**dadurch gekennzeichnet,**
**dass** die Antriebsnabe (24) und die angetriebene Nabe (6) Antriebsarme (28) bzw. angetriebene Arme (16) umfassen, die sich jeweils im Wesentlichen parallel zur zentralen Achse (X-X) erstrecken und durch eine Antriebsaufnahme (32) bzw. eine angetriebene Aufnahme (20) paarweise getrennt im Wesentlichen gleichmäßig um die zentrale Achse herum angeordnet sind, wobei die Antriebsarme in den angetriebenen Aufnahmen angeordnet sind und die angetriebenen Arme in den Antriebsaufnahmen aufgenommen sind, wenn die Antriebsnabe und die angetriebene Nabe miteinander in Eingriff stehen, und dass die angetriebenen Arme (16) jeweils an ihrem freien axialen Ende (18) Kanten (18A) aufweisen, die einander in einer Umfangsrichtung um die zentrale Achse (X-X) gegenüberliegen und die sich unter der Wirkung der Rastfliehgewichte (36) in deren Betriebsstellung an im Boden der den angetriebenen Arm aufnehmenden Antriebsaufnahme (32) ausgebildeten Wänden (32A) abstützen und sowohl parallele als auch zur zentralen Achse (X-X) orthoradiale Stützkomponenten (F'A, F'O) ausbilden.

9. Vorrichtung nach Anspruch 8,
**dadurch gekennzeichnet,**
**dass** die Antriebsarme (28) und die angetriebenen Arme (16) jeweils außerhalb ihrer freien axialen Enden (34, 18) mit mindestens einer geradlinigen Kante (28A, 16A) versehen sind, die im Wesentlichen parallel zur zentralen Achse (X-X) verläuft, wobei sich die geradlinige Kante oder eine der geradlinigen Kanten (28A) jedes Antriebsarms (28) unter Bildung einer zur zentralen Achse (X-X) im Wesentlichen oder ausschließlich orthoradialen Stützkomponente an der geradlinigen Kante oder einer der geradlinigen Kanten (16A) eines der angetriebenen Arme (16) abstützt, wenn sich die Motorwelle (22) um sich selbst dreht und solange die Rastfliehgewichte (36) nicht aus ihrer Ruhestellung heraus ihre Betriebsstellung eingenommen haben.

10. Vorrichtung nach einem der Ansprüche 8 oder 9,
**dadurch gekennzeichnet,**
**dass** die Antriebsarme (28) jeweils ein stumpfes freies axiales Ende (34) aufweisen, gegen das die freien axialen Enden (18) der angetriebenen Arme (16) bei Einführung der angetriebenen Arme in die Antriebsaufnahmen (32) entlang einer Umfangsrichtung um die zentrale Achse (X-X) gleiten.

11. Gerät zur Lebensmittelverarbeitung,
umfassend ein Drehwerkzeug (2) und eine Vorrichtung (1) zum Drehantrieb des Werkzeugs nach einem der vorhergehenden Ansprüche, auf deren Antriebskopf (42) das Werkzeug abnehmbar aufgesetzt ist.

12. Gerät nach Anspruch 11,
**dadurch gekennzeichnet,**
**dass** das Drehwerkzeug (2) ein Korb ist.

13. Gerät nach einem der Ansprüche 11 oder 12,
**dadurch gekennzeichnet,**
**dass** das Gerät eine Zentrifuge für Obst und Gemüse ist.

## Claims

1. A device (1) for driving into rotation a rotary tool (2) for a food processing appliance, notably a basket for a centrifuge for fruit and vegetables,
this device comprises a driving shaft (22), which is rotary on itself around a central axis (X-X) and which is secured to a head (42) for driving the tools (2) into rotation around the axis, the tool being added onto the driving head in a removable way, and the driving head including a driving hub (24) which is adapted to be engaged with a driven hub (6) of the tools (2) for transmitting a rotary movement around the central axis (X-X) of the driving hub to the driven hub,
**characterized in that** the driving head (42) is provided with centrifugal weights (36) for locking the tool (2) on the driving head, which centrifugal weights are moveable, under the effect of a centrifugal force resulting from the setting into a rotation around the central axis (X-X) of the driving head by the driving shaft (22), between a rest position, in which the centrifugal weights do not interfere with the driven hub (6) and a position of use in which, a portion (48) of each of the centrifugal weights is brought closer to the central axis (X-X) and mechanically cooperates with the driven hub for maintaining it engaged with the driving hub (24).

2. The device according to claim 1, **characterized in that** said portion of each of the locking centrifugal weights (36) forms a supporting nose (48) which, when the locking weight is in its position of use, is supported on a cooperation surface (14A), delimited by the outer face of the driven hub (6), so as to both axially maintain the driven hub engaged with the driving hub (24) and radially aligning the driven hub (6) with the central axis (X-X),

3. The device according to claim 2, **characterized in that** said cooperation surface (14A) is substantially frusto-conical, centered on the central axis (X-X) and diverging towards the driving hub (24).

4. The device according to any of the preceding claims, **characterized in that** each of the locking centrifugal weights (36) is moveable between its rest position and its position of use by pivoting around an axis (Z-Z) orthoradial to the central axis (X-X)

5. The device according to any of the preceding claims, **characterized in that** the driving head (42) further includes a support (38) which is at least partly laid out exteriorly around the driving hub (24) and on which the locking centrifugal weights (36) are borne so as to be freely moveable between their rest position and their position of use.

6. The device according to claim 5, **characterized in that** the centrifugal weights (36) are borne on the support (38) via pins (46) centered on orthoradial axes (Z-Z) to the central axis (X-X) respectively.

7. The device according to any of the preceding claims, **characterized by** three locking centrifugal weights (36) which are positioned at 120° from each other around the central axis (X-X).

8. The device according to any of the preceding claims, **characterized in that** the driving hub (24) and the driven hub (6) respectively include driving branches (28) and driven branches (16), which each extend in a substantially parallel way to the central axis (X-X) and which are positioned in a substantially regular way around the central axis while being pairwise separated for example by a driving niche (32) and a driven niche (20), the driving branches being received in the driven niches and the driven branches being received in the driving niches when the driving and driven hubs are engaged with each other,
and **in that** each of the driven branches (16) has, at its free axial end (18), edges (18A) which are opposite to each other along a peripheral direction to the central axis (X-X) and which, under the effect of the locking centrifugal weights (36) in their position of use, are supported on walls (32A) formed in the bottom of the driving niche (32) receiving the driven branch, by forming supporting components (F'A, F'O) both parallel and orthoradial to the central axis (X-X).

9. The device according to claim 8, **characterized in that** each of the driving (28) and driven (16) branches is provided, outside its free axial end (34, 18), with at least one rectilinear edge (28A, 16A) which is substantially parallel to the central axis (X-X), said or one of the rectilinear edges (28A) of each driving branch (28) bearing, while forming an essentially, or even exclusively supporting component, orthoradial to the central axis (X-X), upon said or one of the rectilinear edges (16A) of one of the driven branches (16) when the driving shaft (22) is set into rotation on itself and as long as the locking centrifugal weights (36) have not reached their position of use from their rest position.

10. The device according to one of claims 8 or 9, **characterized in that** each of the driving branches (28) has a blunt free axial end (34), against which the free axial ends (18) of the driven branches (16) slide along a peripheral direction to the central axis (X-X) when the driven branches are introduced into the driving niches (32).

11. A food processing appliance, including a rotary tool (2) and a device (1) for driving this tool into rotation, which is compliant with any of the preceding claims and on the driving head (42) of which the tool is added in a removable way

12. The appliance according to claim 11, **characterized in that** the rotary tool (2) is a basket.

13. The appliance according to claim 11 or 12, **characterized in that** the appliance is a centrifuge for fruit and vegetables.
